# FASCICULE DE BREVET EUROPEEN

(11) **EP 1 361 114 B1**
(45) Date de publication et mention de la délivrance du brevet: **19.10.2005**
(21) Numéro de dépôt: 03360054.5
(22) Date de dépôt: 05.05.2003
(51) Int. Cl.: B60R 1/06

(54) **Rétroviseur extérieur à boîtier fixe**
Aussenrückblickspiegel mit feststehendem Gehäuse
Exterior rear view mirror with fixed housing

(30) Priorité: 10.05.2002 FR 0205812
(43) Date de publication de la demande: 12.11.2003
(73) Titulaire: Ficomirrors France SAS, 57260 Dieuze (FR)
(72) Inventeur: Valade, Christophe, 54760 Arraye (FR)
(74) Mandataire: Nuss, Pierre

(56) Documents cités:
- WO-A-98/46452
- FR-A- 2 684 618
- US-A- 2 878 726

## Description

La présente invention concerne le domaine de la fabrication des accessoires pour l'industrie automobile, en particulier des rétroviseurs, notamment des rétroviseurs extérieurs à boîtier fixe et a pour objet un tel rétroviseur muni d'un élément déflecteur.

Les véhicules automobiles sont généralement équipés de deux rétroviseurs extérieurs fixés chacun sur une portière avant ou sur une partie de carrosserie avant. Ces rétroviseurs sont, le plus souvent, constitués par un ensemble embase et cache-embase de fixation sur la portière ou un élément de carrosserie et par un boîtier monté de manière fixe ou pivotable sur ledit ensemble.

Il existe également des rétroviseurs monoblocs, c'est-à-dire dont le boîtier est d'un seul tenant avec l'ensemble embase et cache-embase de fixation, le miroir de rétroviseur étant monté de manière réglable dans le boîtier. De tels rétroviseurs sont très compacts et présentent généralement un aspect esthétique agréable.

On connaît également, par le document FR-A2 684 618, selon lequel le préambule de la revendication 1 a été délimité, un dispositif de protection pour rétroviseur extérieur, qui est destiné à assurer une bonne visibilité au conducteur en évitant que le miroir de rétroviseur soit souillé et qu'une partie correspondante de la vitre latérale du véhicule soit souillée par des projections, par exemple par temps de pluie.

Ces rétroviseurs connus ne peuvent pas répondre, en l'état, aux prescriptions de sécurité relatives aux chocs latéraux. En effet, ces prescriptions requièrent un déplacement du boîtier en cas de heurt avec un obstacle ou une déflexion de cet obstacle, sans destruction du boîtier.

La présente invention a pour but de pallier ces inconvénients, en proposant un rétroviseur extérieur à boîtier fixe, en particulier de véhicule automobile, permettant simultanément d'empêcher un accrochage éventuel avec un obstacle et d'assurer que le rétroviseur ne soit détruit.

A cet effet, le rétroviseur extérieur à boîtier fixe, en particulier de véhicule automobile, qui est essentiellement constitué par un ensemble formant un boîtier intégrant une embase de support et de montage sur une portière ou sur un élément de carrosserie, est muni d'au moins un élément déflecteur s'étendant au moins devant sa partie rétrovision, tout en préservant ladite rétrovision et en permettant simultanément d'empêcher un accrochage éventuel avec un obstacle et d'assurer que le rétroviseur ne soit détruit et est caractérisé en ce que ledit élément déflecteur se présente sous forme d'une structure de protection convexe, qui s'étend au moins partiellement à partir de la partie supérieure du boîtier de rétroviseur en direction de la portière ou de l'élément de carrosserie et qui est constituée par un treillis à grosses mailles et à armature fine.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
la figure 1 est une vue latérale en perspective d'un rétroviseur conforme à l'invention ;
la figure 2 est une vue en perspective plongeante par l'arrière du rétroviseur suivant la figure 1 ;
la figure 3 est une vue en perspective par l'arrière du rétroviseur suivant la figure 1, et
la figure 4 est une vue analogue à celle de la figure 1 d'une variante de réalisation de l'invention.

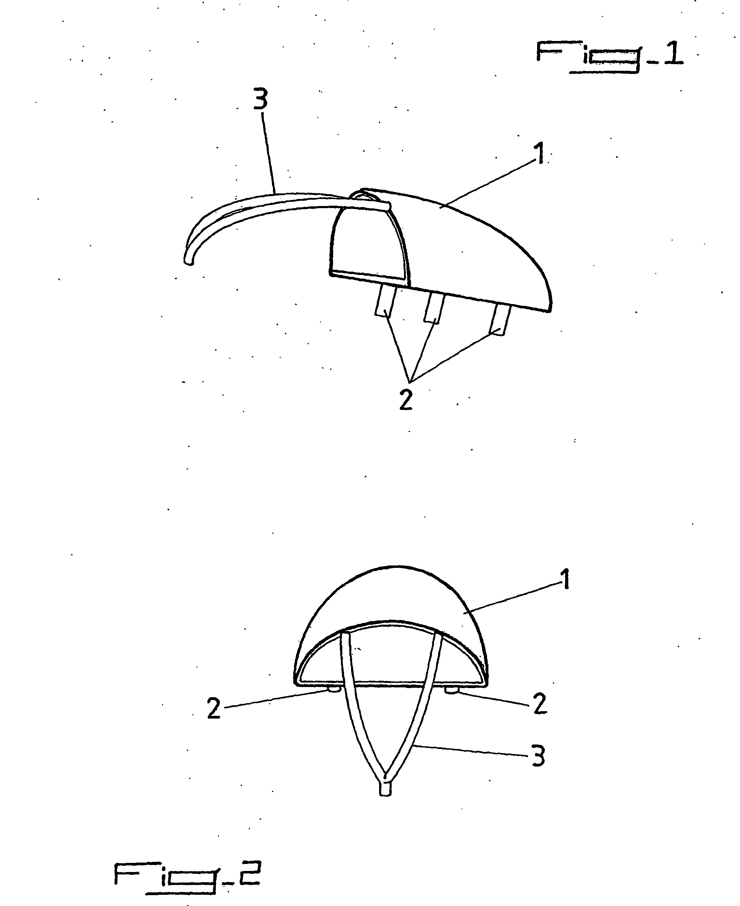

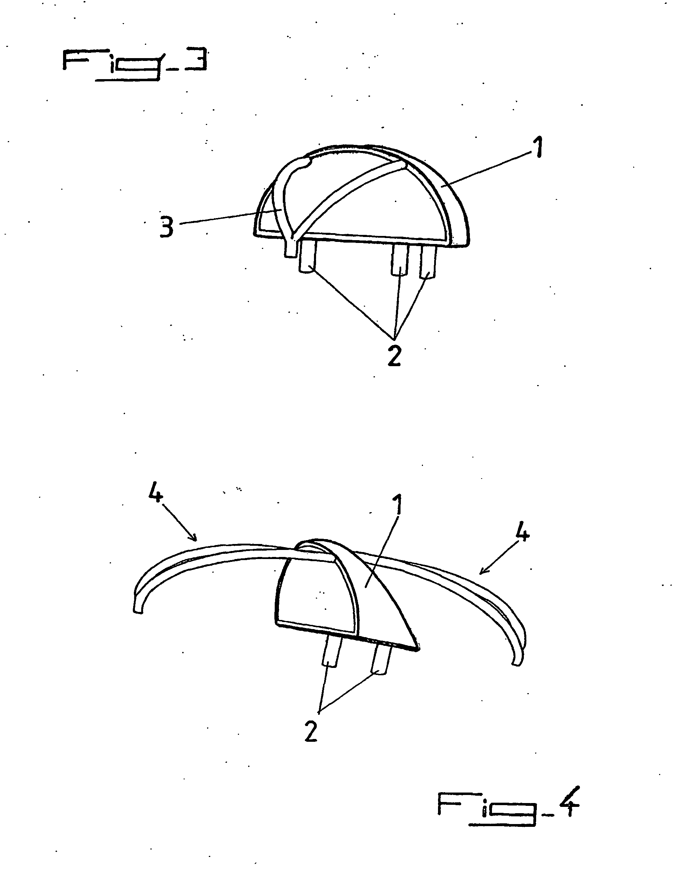

Les figures 1 à 4 des dessins annexés représentent un rétroviseur extérieur, en particulier de véhicule automobile, qui est essentiellement constitué par un ensemble formant un boîtier 1 intégrant une embase de support et de montage sur une portière ou sur un élément de carrosserie par l'intermédiaire de vis ou broches de fixation 2.

Conformément à l'invention, ce rétroviseur est muni d'au moins un élément déflecteur 3 s'étendant au moins devant sa partie rétrovision, tout en préservant ladite rétrovision et en permettant simultanément d'empêcher un accrochage éventuel avec un obstacle et d'assurer que le rétroviseur ne soit détruit.

Selon un mode de réalisation selon l'invention représenté aux figures 1 à 3 des dessins annexés, l'élément déflecteur 3 se présente sous forme d'une structure de protection convexe s'étendant au moins partiellement à partir de la partie supérieure du boîtier 1 de rétroviseur en direction de la portière ou de l'élément de carrosserie. La structure de protection formant l'élément déflecteur 3 est, selon l'invention, constituée, comme le montrent les figures 1 à 3 des dessins annexés, par un treillis à grosses mailles et à armature fine. Ainsi, le treillis formant l'élément déflecteur 3 peut être constitué par de fines tiges métalliques ou en matière synthétique rigide renforcée de fibres.

Une telle constitution de l'élément déflecteur 3 permet d'assurer la protection du boîtier 1 et du miroir qu'il renferme contre tout choc suite à un heurt en direction dudit boîtier et du miroir, l'élément 3 tendant à écarter l'obstacle ou à le dévier de telle manière qu'il passe à l'extérieur de l'encombrement du boîtier de rétroviseur. En outre, la réalisation sous forme d'un treillis, comme représenté aux figures 1 à 3 des dessins annexés permet de garantir une rétrovision maximale conformément aux réglementations en vigueur. En effet, la constitution en treillis peut très facilement être réduite à sa plus simple expression, à savoir à deux tiges partant sensiblement de la partie la plus en saillie du boîtier 1 et s'étendant en direction de la portière ou de la carrosserie de manière convergente.

La figure 4 des dessins annexés représente une variante de réalisation de l'invention, dans laquelle le boîtier 1 est pourvu d'un élément déflecteur double 4 s'étendant de part et d'autre de la partie la plus en saillie du boîtier 1, en avant et en arrière de la partie rétrovision, suivant l'axe longitudinal du rétroviseur et du véhicule automobile ainsi équipé. Une telle réalisation de l'élément déflecteur peut permettre l'obtention d'un effet esthétique nouveau consistant en la réalisation d'une cage de protection entourant un boîtier 1 de rétroviseur de forme et de constitution extrêmement simple.

Selon une autre variante de réalisation de l'invention, la partie de l'élément déflecteur 4 s'étendant en avant de la partie rétrovision du boîtier 1, vue en direction normale de progression d'un véhicule automobile, peut également être constituée par un couvercle de boîtier de forme convexe allongée présentant une section longitudinale verticale symétrique à celle de l'élément déflecteur s'étendant en arrière de la partie rétrovision du boîtier 1. Dans un tel cas, le couvercle du boîtier 1 forme simultanément l'élément déflecteur avant.

Dans le mode de réalisation représenté aux dessins annexés, le boîtier 1 est représenté sous forme d'un ensemble monobloc renfermant un miroir de rétroviseur et son support de réglage. Il convient de noter que cette représentation de boîtier n'est donnée qu'à titre indicatif et qu'il est parfaitement envisageable, pour des raisons esthétiques, de réaliser le boîtier 1 de manière différente, notamment en supprimant, par exemple, le couvercle de boîtier dans le cas d'une réalisation de l'élément déflecteur sous forme d'une pièce s'étendant entièrement au-dessus de la partie la plus en saillie du boîtier 1 et en avant et en arrière de celui-ci.

Grâce à l'invention, il est donc possible de réaliser un rétroviseur extérieur pour véhicule automobile, notamment des rétroviseurs extérieurs à boîtier fixe, en particulier monté sur un élément de carrosserie ou sur la portière, permettant simultanément d'empêcher un accrochage éventuel avec un obstacle et d'assurer que le rétroviseur ne soit détruit.

En outre, le rétroviseur conforme à l'invention permet de répondre parfaitement à la réglementation en vigueur en ce qui concerne les chocs latéraux, tout en assurant la protection du miroir de rétroviseur.

Bien entendu, l'invention n'est pas limitée aux modes de réalisation décrits et représentés aux dessins annexés. Des modifications restent possibles, notamment du point de vue de la constitution des divers éléments sans sortir pour autant du domaine de protection de l'invention défini uniquement par les revendications annexées.

## Revendications

1. Rétroviseur extérieur à boîtier fixe, en particulier de véhicule automobile, essentiellement constitué par un ensemble formant un boîtier (1) intégrant une embase de support et de montage sur une portière ou sur un élément de carrosserie, ledit rétroviseur ayant au moins un élément déflecteur (3; 4) s'étendant au moins devant sa partie rétrovision, tout en préservant ladite rétrovision et en permettant simultanément d'empêcher un accrochage éventuel avec un obstacle et d'assurer que le rétroviseur ne soit détruit, **caractérisé en ce que** ledit élément déflecteur (3) se présente sous forme d'une structure de protection convexe, qui s'étend au moins partiellement à partir de la partie supérieure du boîtier (1) de rétroviseur en direction de la portière ou de l'élément de carrosserie et qui est constituée par un treillis à grosses mailles et à armature fine.

2. Rétroviseur, suivant la revendication 1, **caractérisé en ce que** le treillis formant l'élément déflecteur (3) est constitué par de fines tiges métalliques ou en matière synthétique rigide renforcée de fibres.

3. Rétroviseur, suivant la revendication 2, **caractérisé en ce que** la constitution en treillis est réduite à deux tiges partant sensiblement de la partie la plus en saillie du boîtier (1) et s'étendant en direction de la portière ou de la carrosserie de manière convergente.

4. Rétroviseur, suivant la revendication 1, **caractérisé en ce que** le boîtier (1) est pourvu d'un élément déflecteur double (4) s'étendant de part et d'autre de la partie la plus en saillie du boîtier (1), en avant et en arrière de la partie rétrovision, suivant l'axe longitudinal du rétroviseur et du véhicule automobile ainsi équipé.

5. Rétroviseur, suivant la revendication 4, **caractérisé en ce que** l'élément déflecteur est sous forme d'une cage de protection entourant un boîtier (1) de rétroviseur.

6. Rétroviseur, suivant la revendication 4, **caractérisé en ce que** la partie de l'élément déflecteur (4) s'étendant en avant de la partie rétrovision du boîtier (1), vue en direction normale de progression d'un véhicule automobile, est constituée par un couvercle de boîtier de forme convexe allongée présentant une section longitudinale verticale symétrique à celle de l'élément déflecteur s'étendant en arrière de la partie rétrovision du boîtier (1).

## Patentansprüche

1. Außenrückspiegel mit feststehendem Gehäuse, insbesondere für ein Kraftfahrzeug, im Wesentlichen bestehend aus einer Baueinheit aus einem einen Stütz- und Montagefuß aufweisenden Gehäuse (1) zum Anbringen an einer Tür oder einem Karosserieelement, der wenigstens ein Ablenkelement (3; 4) aufweist, das sich zumindest vor seinem Rückblickteil erstreckt und den Rückblick erlaubt, jedoch gleichzeitig das Hängenbleiben an einem Hindernis und das Zerstören des Rückspiegels verhindert, **dadurch gekennzeichnet, dass** das Ablenkelement (3) als konvexe Schutzstruktur ausgebildet ist, die sich wenigstens teilweise vom oberen Bereich des Rückspiegelgehäuses (1) in Richtung zur Tür oder zu dem Karosserieelement erstreckt und die aus einem Gitter mit großen Maschen und feiner Bewehrung besteht.

2. Rückspiegel nach Anspruch 1, **dadurch gekennzeichnet, dass** das Gitter bildende Ablenkelement (3) aus dünnen Stäben aus Metall oder aus steifem, faserverstärkten Kunststoff besteht.

3. Rückspiegel nach Anspruch 2, **dadurch gekennzeichnet, dass** sich die Gitterausbildung auf zwei im Wesentlichen von den am weitesten hervorstehendem Teil des Gehäuses (1) ausgehende Stäbe beschränkt, die sich in Richtung zur Tür oder zur Karosserie aufeinander zulaufend erstrecken.

4. Rückspiegel nach Anspruch 1, **dadurch gekennzeichnet dass** das Gehäuse (1) mit einem doppelten Ablenkelement (4) versehen ist, das sich beiderseits des hervorstehendsten Bereichs des Gehäuses (1) nach vorne und nach hinten bezüglich des Rückblickteils entlang der Längsachse des Rückspiegels und des damit ausgestatteten Kraftfahrzeugs erstreckt.

5. Rückspiegel nach Anspruch 4, **dadurch gekennzeichnet, dass** das Ablenkelement als ein das Gehäuse (1) des Rückspiegels umgebender Schutzkäfig ausgebildet ist.

6. Rückspiegel nach Anspruch 4, **dadurch gekennzeichnet, dass** das Ablenkelement (4), das sich vor dem Rückblickteil des Gehäuses (1) in der normalen Fahrtrichtung eines Kraftfahrzeugs erstreckt, aus einem Gehäusedeckel mit länglicher, konvexer Form besteht, der in Längsrichtung einen senkrechten, symmetrischen Querschnitt bezüglich des sich nach hinten von dem Rückblickteil des Gehäuses (1) erstreckenden Ablenkelements aufweist.

## Claims

1. External rear-view mirror with a fixed housing, in particular for a motor vehicle, essentially comprising an assembly forming a housing (1) incorporating a base for support and mounting on a door or an element of the bodywork, the said rear-view mirror having a deflector element (3; 4) extending at least in front of its rear-view part whilst retaining the said rear view and simultaneously making it possible to prevent any catching on an obstacle and ensuring that the rear-view mirror is not destroyed, **characterised in that** the said deflector element (3) is in the form of a convex protective structure which extends at least partially from the upper part of the housing (1) of the rear-view mirror in the direction of the door or the element of the bodywork and which is constituted by a mesh with large holes and a fine framework.

2. Rear-view mirror as claimed in Claim 1, **characterised in that** the mesh forming the deflector element (3) comprises fine rods made from metal or rigid fibre-reinforced synthetic material.

3. Rear-view mirror as claimed in Claim 2, **characterised in that** the mesh construction is reduced to two rods starting substantially from the most prominent part of the housing (1) and extending in the direction of the door or of the bodywork in a convergent manner.

4. Rear-view mirror as claimed in Claim 1, **characterised in that** the housing (1) is provide with a double deflector element (4) extending on either side of the most prominent part of the housing (1) in front of and behind the rear-view part along the longitudinal axis of the rear-view mirror and of the motor vehicle equipped therewith.

5. Rear-view mirror as claimed in Claim 4, **characterised in that** the deflector element is in the form of a protective cage surrounding a rear-view mirror housing (1).

6. Rear-view mirror as claimed in Claim 4, **characterised in that** the part of the deflector element (4) extending in front of the rear-view part of the housing (1), viewed in the normal direction of movement of a motor vehicle, comprises a housing cover of elongate convex shape having a vertical longitudinal section symmetrical with that of the deflector element extending behind the rear-view part of the housing (1).
